# EUROPÄISCHE PATENTSCHRIFT

(11) **EP 2 676 020 B1**
(45) Veröffentlichungstag und Bekanntmachung des Hinweises auf die Patenterteilung: **25.02.2015**
(21) Anmeldenummer: 11804584.8
(22) Anmeldetag: 29.12.2011
(51) Int. Cl.: F02B 37/18, F16K 31/528, F16K 31/53, F02M 25/07

(54) **STELLANTRIEB, STRÖMUNGSVENTIL, ABGASTURBOLADER**
ACTUATOR, FLOW VALVE, TURBOCHARGER
MÉCANISME DE COMMANDE, SOUPAPE DE RÉGULATION, TURBOCOMPRESSEUR

(30) Priorität: 14.02.2011 DE 102011004018
(43) Veröffentlichungstag der Anmeldung: 25.12.2013
(73) Patentinhaber: Robert Bosch GmbH, 70442 Stuttgart (DE)
(72) Erfinder: BAEUERLE, Michael, 71735 Eberdingen (DE); SLEZAK, Martin, 37004 Ceske Budejovice (CZ); BERANEK, Michal, 37004 Ceske Budevovice (CZ); STARY, Petr, 37382 Borsov nad Vltavou (CZ); SCHWEINFURTH, Reiner, 75031 Eppingen (DE); NAU, Michael, 72175 Dornhan/Aischfeld (DE); TORNO, Robert, 74321 Bietigheim-Bissingen (DE); KNESCH, Holger, 71640 Ludwigsburg (DE); SCHNEIDER, Helmut, 72631 Aichtal (DE); DIEKMANN, Ralf, 71679 Asperg (DE)
(86) Internationale Anmeldenummer: PCT/EP2011/074259
(87) Internationale Veröffentlichungsnummer: WO 2012/110166

(56) Entgegenhaltungen:
- WO-A1-02/095209
- WO-A1-2007/059100
- DE-A1-102007 054 769
- DE-A1-102009 056 251

## Beschreibung

Die Erfindung betrifft ein Strömungsventil eines Abgasturboladers, mit einem durch einen Stellantrieb betätigbaren Ventilelement, wobei der Stellantrieb eine zwangsgeführte Koppelstange, die mit dem Ventilelement verbunden ist, und einen Elektromotor und ein durch den Elektromotor antreibbares

Zahnradgetriebe aufweist, das ein ausgangsseitiges, verschwenkbar gelagertes Verzahnungselement mit einer exzentrischen Lagerstelle aufweist, die mit der Koppelstange zu deren Antrieb wirkverbunden ist.

Weiterhin betrifft die Erfindung einen Abgasturbolader, insbesondere für ein Kraftfahrzeug, mit mindestens einem betätigbaren Strömungsventil, insbesondere Waste-Gate-Ventil.

### Stand der Technik

Strömungsventile und Abgasturbolader der eingangs genannten Art sind aus dem Stand der Technik bekannt. Bei modernen Verbrennungsmotoren werden Turbolader mit sogenannten Waste-Gate-Ventilen eingesetzt, wobei das Waste-Gate-Ventil in dem Abgasstrom vorgesehen ist, um den Ladedruck des Abgasturboladers zu beeinflussen. Zum Betätigen eines derartigen Strömungsventils ist in der Regel ein Stellantrieb mit einem Elektromotor und einem 1- bis 3-stufigen Getriebe vorgesehen.

Aus der deutschen Offenlegungsschrift DE 10 2007 054 769 A1 geht darüber hinaus ein Strömungsventil eines Abgasturboladers mit einem Stellantrieb für ein bidirektionales Stellglied hervor. Der Stellantrieb umfasst einen Elektromotor, der über ein Zahnradgetriebe eine Koppelstange antreibt. Die Wirkverbindung zwischen dem Zahnradgetriebe und der Koppelstange ist dabei durch einen Kniehebel realisiert, der die Koppelstange mit einem ausgangsseitigen, verschwenkbar gelagerten Verzahnungselement gelenkig verbindet, sodass die Koppelstange eine rein lineare Bewegung entlang ihrer Achserstreckung in Abhängigkeit der Bewegung des Verzahnungselements durchführt. Nachteilig hierbei ist das Spiel zwischen der Koppelstange und dem Stellmotor, das zu einer Verfälschung der Ansteuerung führen kann. Darüber hinaus wird durch die Mechanik des Kniehebels der Wirkungsgrad durch hohe Reibkräfte verringert.

### Offenbarung der Erfindung

Die Erfindung sieht ein Strömungsventil eines Abgasturboladers mit einem Stellantrieb mit den Merkmalen des Anspruchs 1 vor. Dieses hat den Vorteil, dass das Gesamtspiel zwischen dem Elektromotor und der Koppelstange verringert und der Wirkungsgrad des Stellantriebs insgesamt erhöht wird. Dazu ist erfindungsgemäß vorgesehen, dass die Koppelstange direkt mit der Lagerstelle des verschwenkbar gelagerten Verzahnungselements verbunden ist. Der üblicherweise vorgesehene Kniehebel entfällt somit, wodurch eine Lagerstelle entfällt, womit sowohl das Gesamtspiel verringert als auch der Wirkungsgrad des Stellantriebs erhöht wird. Die direkte Ankupplung der Koppelstange an das Verzahnungselement erlaubt eine genaue und verlässliche Einstellung des zu stellenden Elements, wie beispielsweise des Strömungsventils eines Abgasturboladers. Darüber hinaus gestalten sich Konstruktion und Herstellung des erfindungsgemäßen Strömungsventils mit Stellantrieb einfacher als im Stand der Technik.

Die erfindungsgemäße Ausbildung des Strömungsventils mit dem Stellantrieb hat zur Folge, dass die Koppelstange nicht mehr allein bidirektional, also nur linear geführt wird. Stattdessen wird die Linearbewegung durch eine Schwenkbewegung überlagert. Bevorzugt weist der Stellantrieb ein Gehäuse auf, in welchem der Elektromotor und das Zahnradgetriebe zumindest im Wesentlichen angeordnet sind, und welcher Mittel zum Führen der Koppelstange aus dem Gehäuse heraus aufweist. Das Gehäuse dient sowohl der Lagerung als auch zum Schutz der darin befindlichen Komponenten. So ist es beispielsweise denkbar, dass das Gehäuse Elemente zur Lagerung von Zahnrädern und/oder des Verzahnungselements des Zahnradgetriebes aufweist.

Besonders bevorzugt weisen daher die Mittel eine Öffnung in dem Gehäuse auf, die ein Verschwenken der Koppelstange entsprechend der Bewegung des Verzahnungselements erlaubt, sowie einen die Öffnung umgebenden und an dem Stellglied anliegenden Faltenbalg. Der Faltenbalg ist vorzugsweise dicht mit dem Gehäuse sowie mit der Koppelstange verbunden, um das Eindringen von Schmutz oder Feuchtigkeit in das Gehäuse zu verhindern. Durch die elastische Verformbarkeit des Faltenbalgs bewegt sich das koppelstangenseitige Ende mit der Koppelstange mit, ohne dass sich der Faltenbalg von der Koppelstange oder von dem Gehäuse löst. Die Öffnung in dem Gehäuse, durch welche die Koppelstange geführt ist, um innerhalb des Gehäuses mit dem Verzahnungselement und außerhalb des Gehäuses mit dem Stellelement verbunden zu sein, weist bevorzugt eine langlochartige Kontur auf, um die Seitwärtsbewegung der Koppelstange entsprechend der Auslenkung der exzentrisch angeordneten Lagerstelle des Verzahnungselements zu ermöglichen. Gemäß einer bevorzugten Weiterbildung ist vorgesehen, dass die Breite des Langlochs im Wesentlichen der Breite der Koppelstange entspricht, sodass diese zumindest in eine Richtung, senkrecht zur Schwenkbewegung, von dem Gehäuse geführt wird.

Vorzugsweise ist das dem Verzahnungselement zugeordnete Ende der Koppelstange einseitig an dem Verzahnungselement mit der Lagerstelle verbunden. Hierzu weist das Verzahnungselement zweckmäßigerweise an einer Stirnseite einen Zapfen auf, der mit einer Zapfenaufnahme, wie beispielsweise einer Bohrung, der Koppelstange zusammenwirkt. Natürlich ist es auch denkbar, den Zapfen an der Koppelstange vorzusehen und das Verzahnungselement mit einer Bohrung, sodass der Zapfen der Koppelstange in die Bohrung des Verzahnungselements eingreift.

Gemäß einer bevorzugten Ausführungsform ist vorgesehen, dass das dem Verzahnungselement zugeordnete Ende gabelförmig ausgebildet ist und das Verzahnungselement beidseitig umgreift, um beidseitig des Verzahnungselements mit der Lagerstelle verbunden zu sein. Vorzugsweise weist hierbei das Verzahnungselement beidseitig, also an beiden Stirnseiten, jeweils einen Lagerzapfen auf, der sich zweckmäßigerweise parallel zur Schwenkachse des Verzahnungselements erstreckt. Die Lagerzapfen sind dabei fluchtend zueinander ausgerichtet und sind vorzugsweise einstückig mit dem Verzahnungselement ausgebildet. Alternativ ist es auch denkbar, einen Lagerbolzen in einen Durchbruch des Verzahnungselements zur Bildung der beidseitigen Lagerstelle einzusetzen. Durch die gabelförmige Ausbildung des einen Endes der Koppelstange umgreift dieses das Verzahnungselement, sodass es an beiden Stirnseiten mit dem jeweiligen Lagerzapfen oder Lagerzapfenabschnitt in Eingriff bringbar ist beziehungsweise steht. Durch die beidseitige Ankoppelung werden eine verbesserte Führung der Koppelstange und eine günstigere Belastung des Verzahnungselements gewährleistet.

Gemäß einer vorteilhaften Weiterbildung der Erfindung ist vorgesehen, dass dem Verzahnungselement zu seiner verschwenkbaren Lagerung eine Welle zugeordnet ist. Die Welle ist vorzugsweise einstückig mit dem Verzahnungselement ausgebildet oder als separates Bauteil vorgesehen. Bevorzugt ist die Welle drehbar in dem Gehäuse des Stellantriebs gelagert. Alternativ ist die Welle vorzugsweise drehfest in dem Gehäuse und das Verzahnungselement drehbar an der Welle gelagert angeordnet.

Vorzugsweise weist die Koppelstange eine Aussparung oder eine Kontur zur zumindest bereichsweisen Aufnahme der Welle auf. Dadurch lässt sich der Betätigungsweg der Koppelstange vergrößern, indem die Lagerstelle in zumindest einer Betriebsstellung hinter der Welle des Verzahnungselements angeordnet ist, aus Richtung des zu stellenden Elements gesehen. Die Koppelstange ist dazu bevorzugt bereichsweise bogenförmig ausgebildet, sodass sie dadurch in einer ersten Endposition an der Welle vorbei geführt und das Verzahnungselement um mindest 180° verschwenkbar ist. Hierdurch wird der größtmögliche Betätigungsweg für die Koppelstange bereitgestellt.

Gemäß einer bevorzugten Weiterbildung der Erfindung ist vorgesehen, dass die Welle kurbelwellenartig ausgebildet ist, wobei ein Abschnitt der kurbelartigen Welle von einem die exzentrische Lagerstelle bildenden Zapfen gebildet ist. Durch die kurbelwellenartige Ausbildung erübrigt sich das Vorsehen einer Aussparung oder Kontur der Koppelstange zur Aufnahme der Welle. Stattdessen kann die Koppelstange durch die Kurbelwellenform am Verzahnungselement vollständig gerade ausgebildet sein. In dem Fall wirkt die Koppelstange wie eine Pleuelstange. Die kurbelwellenartige Welle des Verzahnungselements ist dabei vorzugsweise mehrteilig ausgebildet, kann jedoch auch einteilig vorgesehen sein.

Das erfindungsgemäße Strömungsventil zeichnet sich durch einen Stellantrieb aus, wie er oben stehend beschrieben wurde. Die Koppelstange ist dabei mit dem Verzahnungselement und mit dem Ventilelement des Strömungsventils jeweils direkt verbunden, sodass eine direkte Kraftübertragung mit geringen Wirkungsgradverlusten und einem nur geringen Spiel gewährleistet ist.

Der erfindungsgemäße Abgasturbolader zeichnet sich durch ein Strömungsventil, wie es oben stehend beschrieben wurde, aus. Durch die vorteilhafte Ausbildung ergibt sich im Betrieb stets eine genaue Einstellung des Ventilelements.

Im Folgenden soll die Erfindung anhand der Zeichnung näher erläutert werden.
Dazu zeigen
- Figuren 1A bis 1C: ein erstes Ausführungsbeispiel eines vorteilhaften Stellantriebs,
- Figuren 2A bis 2C: ein zweites Ausführungsbeispiel eines vorteilhaften Stellantriebs und
- Figuren 3A bis 3C: ein drittes Ausführungsbeispiel des vorteilhaften Stellantriebs.

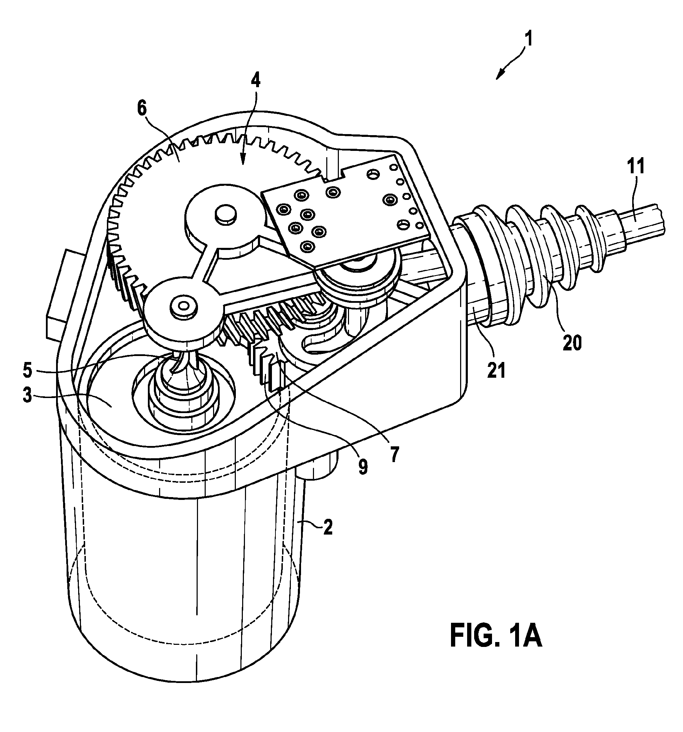

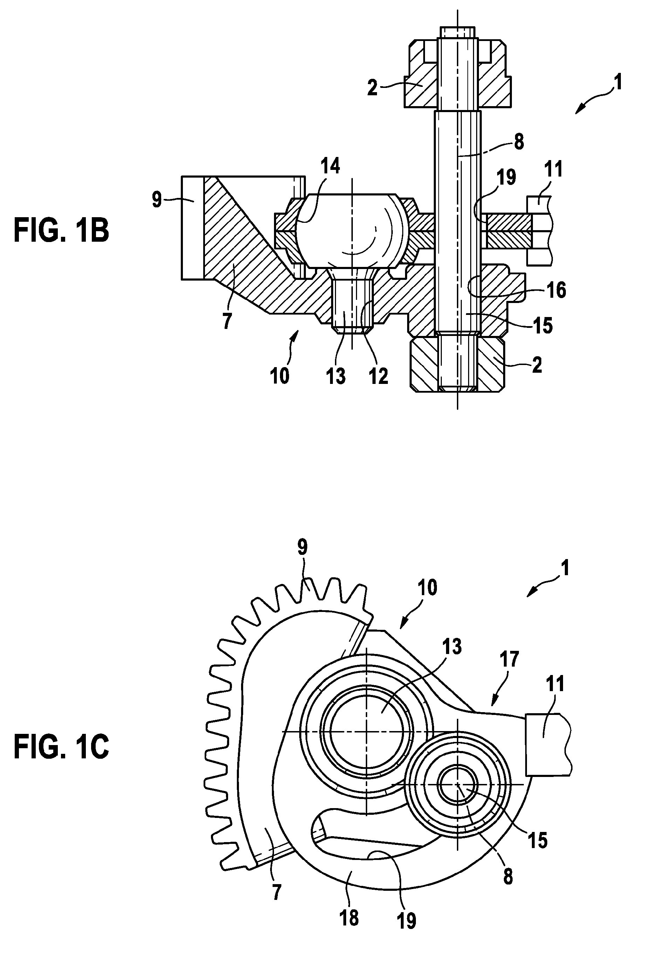

Die Figuren 1A bis 1C zeigen einen Stellantrieb 1 gemäß einem ersten Ausführungsbeispiel. Der Stellantrieb 1 ist in Figur 1A in einer perspektivischen Darstellung, in Figur 1B in einer Schnittdarstellung und in Figur 1C in einer Draufsicht dargestellt. Der Stellantrieb 1 umfasst ein Gehäuse 2, in welchem ein Elektromotor 3 sowie ein Zahnradgetriebe 4 gehalten sind. Das Zahnradgetriebe 4 umfasst ein eingangsseitiges Zahnrad 5, das auf der Abtriebswelle des Elektromotors 3 angeordnet ist und in Eingriff mit einem ersten Zwischenzahnrad 6 steht. Das erste Zwischenzahnrad 6 weist eine deutlich größere Zähnezahl sowie einen deutlich größeren Radius als das eingangsseitige Zahnrad 5 auf.

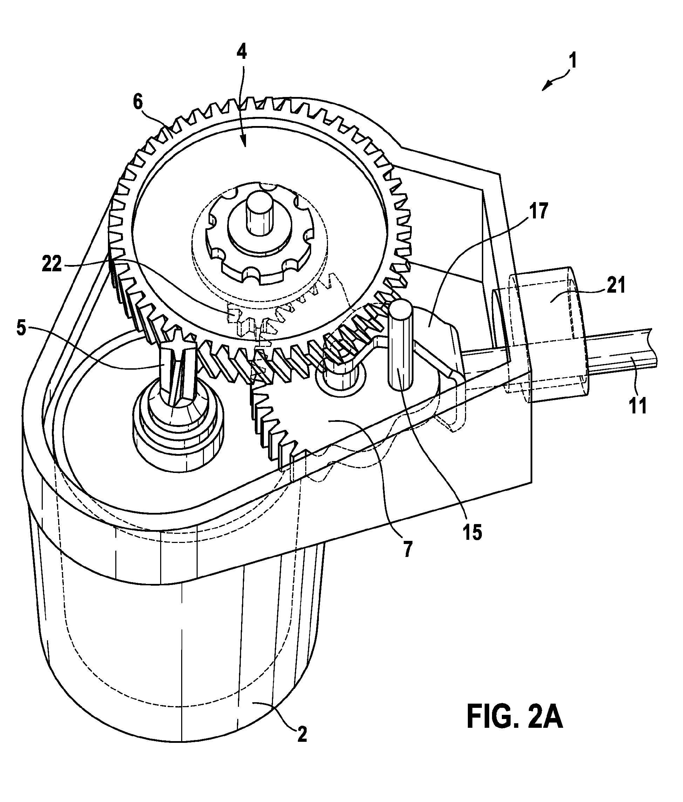

Hierdurch wird eine erste Übersetzungsstufe geboten. Das erste Zwischenzahnrad 6 ist mit einem zweiten Zwischenzahnrad verbunden, das in der Darstellung gemäß Figur 1A unterhalb des ersten Zwischenzahnrads 1 auf der gleichen Welle angeordnet ist. Da das zweite Zwischenzahnrad im Vergleich zum ersten Zwischenzahnrad einen kleineren Durchmesser und eine kleinere Zähnezahl aufweist, ist es in der Darstellung gemäß Figur 1A nicht zu erkennen, jedoch in Figur 2A mit dem Bezugszeichen 22 gekennzeichnet. Es wird von dem ersten Zwischenzahnrad 6 verdeckt. Hierdurch wird eine zweite Übersetzungsstufe gebildet. Das zweite Zwischenzahnrad 22 kämmt mit einem ausgangsseitigen Verzahnungselement 7. Im Unterschied zu den bisher beschriebenen Zahnrädern ist das Verzahnungselement 7 nicht als Zahnrad, sondern als im Wesentlichen V-förmiges Zahnsegment ausgebildet, das verschwenkbar in dem Gehäuse 2 angeordnet ist. Dabei ist die Schwenkachse 8 des Verzahnungselements 7, wie insbesondere in Figur 1C dargestellt, außermittig, insbesondere im spitzen Winkel des im Wesentlichen V-förmig geformten Verzahnungselements 7 angeordnet. Das Verzahnungselement 7 weist entlang eines Außenumfangabschnitts eine Verzahnung 9 auf, die mit dem zweiten Zwischenzahnrad 22 in Eingriff steht.

Das Verzahnungselement 7 weist exzentrisch angeordnet bezüglich der Schwenkachse 8 eine Lagerstelle 10 auf, an welcher eine Koppelstange 11 mit dem Verzahnungselement 7 verbunden ist. Die Koppelstange 11 führt durch die Wand des Gehäuses 2 hindurch nach außen und ist an seinem dem Verzahnungselement 7 abgewandten Ende mit einem zu betätigenden Stellelement, insbesondere Ventilelement eines betätigbaren Strömungsventils, verbunden.

An der Lagerstelle 10 weist das Verzahnungselement 7 eine Aufnahmebohrung 12 auf, in welche ein Lagerzapfen 13 eingreift, der mit der Koppelstange 11 fest verbunden ist, und im Wesentlichen senkrecht zur Hauptlängsachse der Koppelstange 11 ausgerichtet ist. Der Lagerzapfen 13 ist drehbar in der Aufnahmebohrung 12 gehalten. Der Lagerzapfen 13 ist dabei vorzugsweise drehfest in einer Aufnahme 14 der Koppelwelle 11 gehalten. Durch eine Querschnittserweiterung in Richtung der Kolbenstange 11 bildet der Lagerzapfen 13 einen Axialanschlag für das Verzahnungselement 7, wobei das Verzahnungselement 7 im Bereich der Aufnahmebohrung 12 eine kreisringförmige Erhebung aufweist, auf welcher der Lagerzapfen 13 mit seinem Axialanschlag aufliegt, wie am besten in Figur 1B dargestellt.

Die Schwenkachse 8 des Verzahnungselements 7 ist von einer Welle 15 gebildet, die zumindest im Wesentlichen parallel zur Achse des Lagerzapfens 13 ausgerichtet ist, und die in dem Gehäuse 2 gelagert ist. Die Welle 15 ist dabei beidseitig des Verzahnungselements 7 in dem Gehäuse 2 und/oder in einer die Welle 15 aufnehmenden Lagerbohrung 16 des Verzahnungselements drehbar gelagert.

Wie am besten aus Figur 1C ersichtlich, weist das dem Verzahnungselement 7 zugewandte Ende 17 der Koppelstange 11 einen in etwa nierenförmigen Abschnitt 18 auf, in welchem der Lagerzapfen 13 gelagert ist. Dabei sind der Lagerzapfen 13, die Koppelstange 11 und die Welle 15 derart zueinander angeordnet, dass die Welle 15 zwischen dem Lagerzapfen 13 und dem wesentlichen Teil der Koppelstange 11 angeordnet ist, sodass von der Koppelstange 11 aus gesehen der Lagerzapfen 13 beziehungsweise die Lagerstelle 10 hinter der Welle 15 an dem Verzahnungselement 7 liegen. Der Abschnitt 18 weist dabei eine Aussparung 19 auf, die langlochförmig ausgebildet ist, und durch welche sich die Welle 15 hindurch erstreckt, wie auch aus Figur 1 B ersichtlich. Die Aussparung 19 ist dabei derart bogenförmig in ihrer Längserstreckung geformt, dass, wenn das Verzahnungselement 7 durch das Zahnradgetriebe 4 angetrieben wird und um die Schwenkachse 8 schwenkt, die Koppelstange 11 mit der Aussparung 19 um die Welle 15 mit verschwenkt wird. Im Unterschied zu bekannten Stellantrieben aus dem Stand der Technik führt die Koppelstange 11 nicht nur eine Linearbewegung durch, sondern wird aufgrund der direkten Anbindung an das Verzahnungselement 7 an der Lagerstelle 10 auch seitlich verschwenkt beziehungsweise ausgelenkt. Durch die Aussparung 19 kann dieses Ausschwenken und Auslenken erfolgen, obwohl sich die Lagerstelle 10, zumindest in der dargestellten Betriebsstellung, hinter der Welle 15 befindet. Diese Ausbildung ermöglicht einen besonders großen Betätigungsweg für die Koppelstange 11.

Um die Schwenkbewegung der Koppelstange 11 zu ermöglichen, weist das Gehäuse 2 in dem Durchführungsbereich eine Öffnung auf, die vorzugsweise langlochartig ausgebildet ist, um die seitliche Bewegung der Koppelstange 11 zu erlauben. Bevorzugt ist vorgesehen, dass ein Faltenbalg 20 einendig die Öffnung des Gehäuses 2 umgibt und anderendig die Koppelstange 11 umschließt, wie in Figur 1A dargestellt. Zweckmäßigerweise ist der Faltenbalg 20 dabei dicht mit der Koppelstange 11 und mit dem Gehäuse 2 verbunden, sodass durch die Öffnung des Gehäuses 2 kein Schmutz oder Feuchtigkeit in das Gehäuseinnere gelangen kann, und dennoch die Verschwenkbarkeit beziehungsweise Bewegbarkeit der Koppelstange 11 gewährleistet wird. Vorzugsweise weist das Gehäuse 2 dazu im Bereich der Öffnung einen Stutzen 21 auf, der von der Gehäuseaußenwand absteht, und über welchen der elastisch verformbare Faltenbalg 20 an seinem einen Ende geschoben ist.

Insgesamt wird durch die vorteilhafte Ausbildung des Stellantriebs 1 gemäß dem vorliegenden Ausführungsbeispiel eine besonders spielfreie und dadurch direkte Verbindung von dem Elektromotor 3 zu dem zu verstellenden Stellelement, wie zum Beispiel dem oben genannten Ventilelement, gewährleistet, sodass letzteres stets sehr genau einstellbar ist. Darüber hinaus weist der Stellantrieb 1 durch die vorteilhafte Ausgestaltung einen hohen Wirkungsgrad auf, da im Vergleich zu herkömmlichen Stellantrieben insgesamt eine geringere Reibung zur Betätigung der Koppelstange 11 überwunden werden muss.

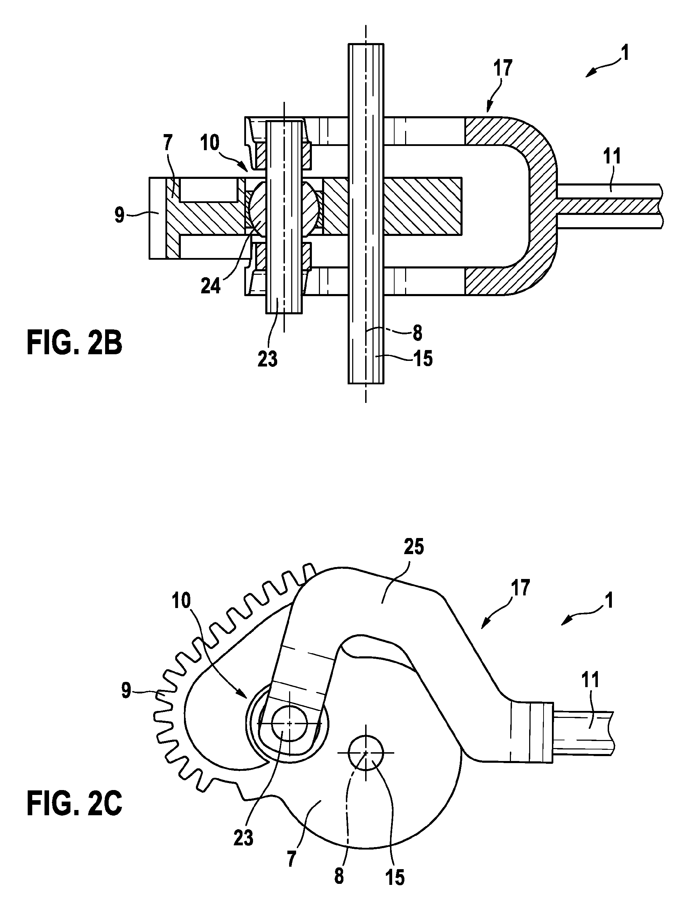

Die Figuren 2A bis 2C zeigen ein zweites Ausführungsbeispiel des Stellantriebs 1, wobei bisher bekannte Elemente mit den gleichen Bezugszeichen versehen sind, sodass insofern auf die oben stehende Beschreibung verwiesen wird. Im Folgenden soll im Wesentlichen nur auf Unterschiede eingegangen werden. Figur 2A zeigt eine perspektivische Darstellung, Figur 2B eine Schnittdarstellung und Figur 2C eine Draufsicht. Aus Übersichtlichkeitsgründen ist in der Figur 2A der Faltenbalg 20 nicht dargestellt.

Im Unterschied zu dem vorhergehenden Ausführungsbeispiel, bei welchem die Koppelstange 11 einseitig an dem Verzahnungselement 7 verschwenkbar angeordnet ist, ist gemäß dem zweiten Ausführungsbeispiel eine höhere Stabilität des Stellantriebs 1 durch eine beidseitige Verbindung der Koppelstange 11 an dem Verzahnungselement 7 geboten. Das Ende 17 der Koppelstange 11 gemäß dem vorliegenden Ausführungsbeispiel ist hierzu gabelförmig ausgebildet und umgreift das Verzahnungselement 7 beidseitig.

Wie am besten aus Figur 2B ersichtlich, wird die Lagerstelle 10 von einem Lagerzapfen, der als Lagerbolzen 23 ausgebildet ist und sich durch beide Schenkel des gabelförmigen Endes 17 der Koppelstange 11 sowie durch das Verzahnungselement 7 erstreckt. Vorzugsweise ist der Lagerbolzen 23 in dem Verzahnungselement 7 mittels eines Kugelgelenks 24 gelagert, um eine Schrägstellung der Kolbenstange im Bezug auf das Verzahnungselement 7 zu ermöglichen und somit Verspannungen oder Verklemmungen zu verhindern. Ein derartiges Kugelgelenk ist vorzugsweise auch in den anderen Ausführungsbeispielen vorgesehen, auch wenn es mit Bezug auf das jeweilige Ausführungsbeispiel nicht explizit beschrieben ist.

Im Unterschied zu dem vorhergehenden Ausführungsbeispiel weist das Ende 17 keine Aussparung 19 auf, sondern eine bogenförmige, insbesondere hakenförmige Kontur 25, sodass die Koppelstange 11 mit ihrem Ende 17 um die Welle 15 herum geführt ist und in der dargestellten Betriebsstellung an der Lagerstelle 10 hinter der Welle 15 angreift.

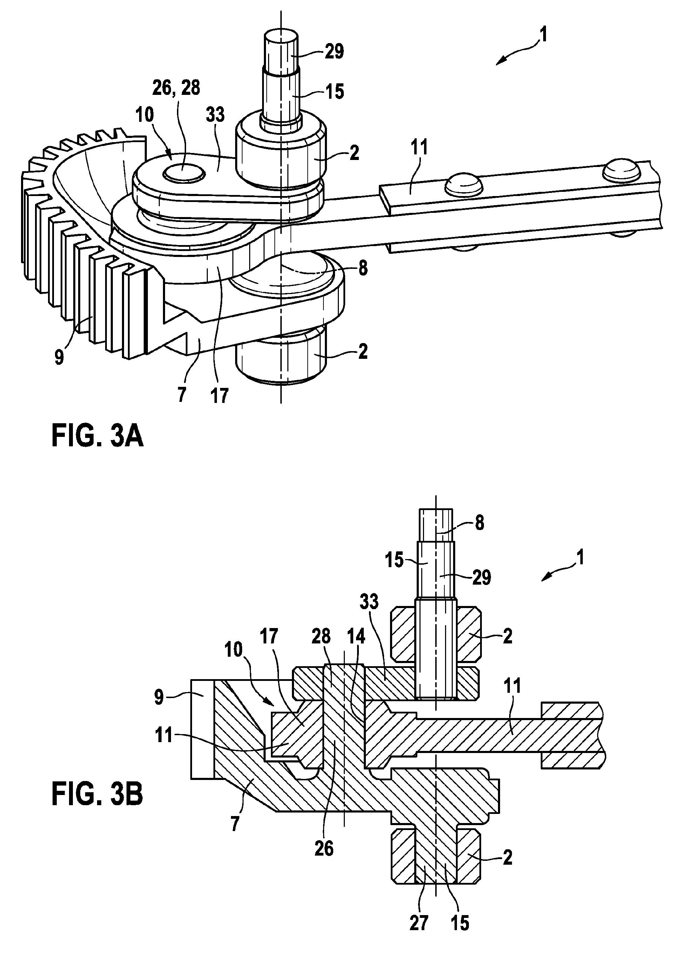

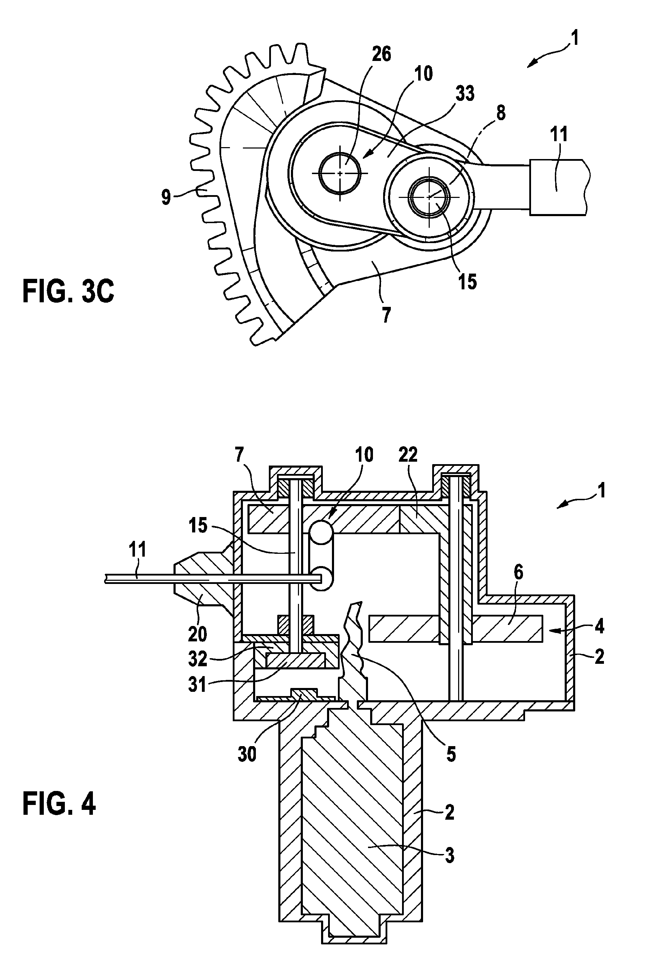

Figuren 3A bis 3C zeigen ein drittes Ausführungsbeispiel des Stellantriebs, wobei gleiche Elemente mit den gleichen Bezugszeichen versehen sind, sodass insofern wiederum auf die oben stehende Beschreibung verwiesen wird. Im Folgenden soll im Wesentlichen auf die Unterschiede eingegangen werden. Figur 3A zeigt dabei das Verzahnungselement 7 und die Koppelstange 11 in einer perspektivischen Darstellung, während Figuren 3B und 3C eine Schnittdarstellung (Figur 3B) und eine Draufsicht (Figur 3C) zeigen.

Der Wesentliche Unterschied des Stellantriebs 1 gemäß dem dritten Ausführungsbeispiel zu den vorherigen Ausführungsbeispielen liegt darin, dass die das Verzahnungselement 7 lagernde Welle 15 kurbelwellenartig ausgebildet ist, wobei ein Abschnitt von ihr durch einen die Lagerstelle 10 definierenden Zapfen 26 gebildet ist.

Das Lagerelement 7 weist einen einstückig damit ausgebildeten Lagerzapfen 26 auf, der sich parallel zur Schwenkachse 8 erstreckt. Die Welle 15 ist in mehrere Abschnitte aufgeteilt, wobei ein erster Abschnitt 27 einstückig mit dem Verzahnungselement 7 ausgebildet ist und zu dem Lagerzapfen 26 entgegengesetzt zeigend ausgerichtet ist. Der zweite Abschnitt wird von dem Lagerzapfen 28 gebildet und ein dritter Abschnitt 29 verläuft wiederum fluchtend zu dem Abschnitt 27. Hierfür ist wiederum ein Hebelelement 33 vorgesehen. Durch die wie oben bereits beschriebene, exzentrische Anordnung der Lagerstelle 10 bezüglich der Schwenkachse 8 ergibt sich somit ein kurbelwellenartiger Verlauf der Welle 15. Dadurch kann eine besondere Formgebung des Endes 17 der Koppelstange 11 entfallen, sodass die Koppelstange 11 vorzugsweise an ihrem Ende 17 lediglich die Aufnahme 14 für den Lagerzapfen 26 aufweist und ansonsten gerade (verlaufend) ausgebildet ist. Durch die kurbelwellenartige Ausbildung der Welle 15 wird ein besonders kostengünstiger und vor allem kompakter Stellantrieb 1 geboten.

Zur Übersicht zeigt Figur 4 den prinzipiellen Aufbau des Stellantriebs 1 in einer vereinfachten Darstellung. Die Prinzipskizze der Figur 4 zeigt außerdem einen Sensor 30, der die Drehbewegung der Welle 15 und damit die Stellung der Koppelstange 11 erfasst. Dazu ist die Welle 15 an ihrem dem Sensor 30 zugewandten Ende mit einem Permanentmagneten 31 versehen, dessen Magnetfeld von dem Sensor 30 erfasst wird. Vorzugsweise sind mehr als einer, besonders bevorzugt eine Vielzahl von Magneten über einen Umfang einer auf der Welle 15 angeordneten Scheibe 32 angeordnet, sodass der Sensor 30 die Position der Welle 15 sowie der Koppelstange 11 genau feststellen kann. Durch den Entfall des sonst üblichen Kniehebels sind die vom Sensor erfassten Werte, insbesondere aufgrund des verringerten Spiels, genauer und verlässlicher.

## Patentansprüche

1. Strömungsventil eines Abgasturboladers mit einem durch einen Stellantrieb (1) betätigbaren Ventilelement, wobei der Stellantrieb eine zwangsgeführte Koppelstange (11) zum Betätigen des Ventilelements aufweist, die mit dem Ventilelement verbunden ist, sowie einen Elektromotor (3) und ein durch den Elektromotor (3) antreibbares Zahnradgetriebe (4), das ein ausgangsseitiges, verschwenkbar gelagertes Verzahnungselement (7) mit einer exzentrischen Lagerstelle (10) aufweist, die mit der Koppelstange (11) zu deren Antrieb wirkverbunden ist, **dadurch gekennzeichnet, dass** die Koppelstange (11) direkt mit der Lagerstelle (10) verbunden ist.

2. Strömungsventil nach Anspruch 1, **gekennzeichnet durch** ein Gehäuse (2), in welchem der Elektromotor und das Zahnradgetriebe (4) zumindest im Wesentlichen angeordnet sind, und welches Mittel zum Führen der Koppelstange (11) aus dem Gehäuse heraus aufweist.

3. Strömungsventil nach Anspruch 2, **dadurch gekennzeichnet, dass** die Mittel in dem Gehäuse (2) eine Öffnung, die ein Verschwenken der Koppelstange (11) erlaubt, sowie einen die Öffnung umgebenden und an dem Gehäuse (2) anliegenden Faltenbalg (20) umfassen.

4. Strömungsventil nach einem der vorhergehenden Ansprüche, **dadurch gekennzeichnet, dass** das dem Verzahnungselement (7) zugeordnete Ende der Koppelstange (11) einseitig an dem Verzahnungselement (7) mit der Lagerstelle (10) verbunden ist.

5. Strömungsventil nach einem der vorhergehenden Ansprüche, **dadurch gekennzeichnet, dass** das dem Verzahnungselement (7) zugeordnete Ende der Koppelstange (11) gabelförmig ausgebildet ist und das Verzahnungselement (7) beidseitig umgreift, um beidseitig des Verzahnungselements (7) mit der Lagerstelle (10) verbunden zu sein.

6. Strömungsventil nach einem der vorhergehenden Ansprüche, **dadurch gekennzeichnet, dass** dem Verzahnungselement (7) zu seiner verschwenkbaren Lagerung eine Welle (15) zugeordnet ist.

7. Strömungsventil nach Anspruch 6, **dadurch gekennzeichnet, dass** die Koppelstange (11) eine Aussparung oder eine Kontur zur zumindest bereichsweisen Aufnahme der Welle (15) aufweist.

8. Strömungsventil nach Anspruch 6 oder 7, **dadurch gekennzeichnet, dass** die Welle (15) kurbelwellenartig ausgebildet ist, wobei ein Abschnitt der kurbelwellenartigen Welle (15) von einem die exzentrische Lagerstelle (10) bildenden Zapfen gebildet ist.

9. Abgasturbolader, insbesondere für ein Kraftfahrzeug, mit mindestens einem betätigbaren Strömungsventil, insbesondere Waste-Gate-Ventil, **gekennzeichnet durch** die Ausbildung des Strömungsventils nach einem der Ansprüche 1 bis 8.

## Claims

1. Flow valve of an exhaust-gas turbocharger, having a valve element which can be actuated by means of a servo drive (1), wherein the servo drive has a positively guided coupling rod (11) for the actuation of the valve element, said coupling rod being connected to the valve element, and has an electric motor (3) and a gearwheel mechanism (4), which gearwheel mechanism can be driven by the electric motor (3) and has an output-side, pivotably mounted toothing element (7) with an eccentric bearing point (10) which is operatively connected to the coupling rod (11) so as to drive the latter, **characterized in that** the coupling rod (11) is connected directly to the bearing point (10).

2. Flow valve according to Claim 1, **characterized by** a housing (2) in which the electric motor and the gearwheel mechanism (4) are at least substantially arranged and which has means for leading the coupling rod (11) out of the housing.

3. Flow valve according to Claim 2, **characterized in that** the means in the housing (2) comprise an opening, which permits pivoting of the coupling rod (11), and a corrugated bellows (20) which surrounds the opening and which bears against the housing (2).

4. Flow valve according to one of the preceding claims, **characterized in that** that end of the coupling rod (11) which is assigned to the toothing element (7) is connected on one side to the toothing element (7) by way of the bearing point (10).

5. Flow valve according to one of the preceding claims, **characterized in that** that end of the coupling rod (11) which is assigned to the toothing element (7) is of fork-like form and engages around the toothing element (7) on both sides in order to be connected to the bearing point (10) on both sides of the toothing element (7).

6. Flow valve according to one of the preceding claims, **characterized in that** the toothing element (7) is assigned a shaft (15) for the pivotable mounting thereof.

7. Flow valve according to Claim 6, **characterized in that** the coupling rod (11) has a cutout or contour for receiving the shaft (15) at least in regions.

8. Flow valve according to Claim 6 or 7, **characterized in that** the shaft (15) is of crankshaft-like form, wherein one section of the crankshaft-like shaft (15) is formed by a journal which forms the eccentric bearing point (10).

9. Exhaust-gas turbocharger, in particular for a motor vehicle, having at least one actuable flow valve, in particular wastegate valve, **characterized by** the design of the flow valve according to one of Claims 1 to 8.

## Revendications

1. Soupape d'écoulement d'un turbocompresseur à gaz d'échappement comprenant un élément de soupape pouvant être actionné par un entraînement de commande (1), l'entraînement de commande présentant une barre de liaison (11) guidée par force pour l'actionnement de l'élément de soupape, laquelle est connectée à l'élément de soupape, ainsi qu'un moteur électrique (3) et une transmission à engrenage (4) pouvant être entraînée par le moteur électrique (3), laquelle présente un élément de denture (7) côté sortie, monté de manière à pouvoir pivoter, avec un point de palier excentrique (10) qui est connecté fonctionnellement à la barre de liaison (11) en vue de son entraînement, **caractérisée en ce que** la barre de liaison (11) est connectée directement au point de palier (10).

2. Soupape d'écoulement selon la revendication 1, **caractérisée par** un boîtier (2) dans lequel sont disposés au moins essentiellement le moteur électrique et la transmission à engrenage (4), et qui présente des moyens pour guider la barre de liaison (11) hors du boîtier.

3. Soupape d'écoulement selon la revendication 2, **caractérisée en ce que** les moyens dans le boîtier (2) comprennent une ouverture qui permet un pivotement de la barre de liaison (11), ainsi qu'un soufflet (20) entourant l'ouverture et s'appliquant contre le boîtier (2).

4. Soupape d'écoulement selon l'une quelconque des revendications précédentes, **caractérisée en ce que** l'extrémité de la barre de liaison (11) associée à l'élément de denture (7) est connectée au point de palier (10) d'un côté au niveau de l'élément de denture (7).

5. Soupape d'écoulement selon l'une quelconque des revendications précédentes, **caractérisée en ce que** l'extrémité de la barre de liaison (11) associée à l'élément de denture (7) est réalisée en forme de fourche et vient en prise des deux côtés autour de l'élément de denture (7), afin d'être connectée au point de palier (10) des deux côtés de l'élément de denture (7).

6. Soupape d'écoulement selon l'une quelconque des revendications précédentes, **caractérisée en ce qu'**un arbre (15) est associé à l'élément de denture (7) en vue de son support sur palier pivotant.

7. Soupape d'écoulement selon la revendication 6, **caractérisée en ce que** la barre de liaison (11) présente un évidement ou un profilage afin de recevoir au moins en partie l'arbre (15).

8. Soupape d'écoulement selon la revendication 6 ou 7, **caractérisée en ce que** l'arbre (15) est réalisé à la manière d'un vilebrequin, une portion de l'arbre (15) de type vilebrequin étant formée par un tourillon formant le point de palier excentrique (10).

9. Turbocompresseur à gaz d'échappement, en particulier pour un véhicule automobile, comprenant au moins une soupape d'écoulement pouvant être actionnée, en particulier une soupape de décharge, **caractérisé par** la réalisation de la soupape d'écoulement selon l'une quelconque des revendications 1 à 8.
